(19) Europäisches Patentamt
European Patent Office
Office européen des brevets

(11) EP 0 769 646 B1

(12) EUROPÄISCHE PATENTSCHRIFT

(45) Veröffentlichungstag und Bekanntmachung des Hinweises auf die Patenterteilung:
16.09.1998 Patentblatt 1998/38

(51) Int Cl.⁶: F16L 21/06

(21) Anmeldenummer: 95116480.5

(22) Anmeldetag: 19.10.1995

(54) **Rohrschelle**

Pipe clamp

Collier de serrage

(84) Benannte Vertragsstaaten:
DE FR GB IT

(43) Veröffentlichungstag der Anmeldung:
23.04.1997 Patentblatt 1997/17

(73) Patentinhaber: Rasmussen GmbH
D-63477 Maintal (DE)

(72) Erfinder: Sauer, Heinz
D-63549 Ronneburg (DE)

(74) Vertreter: Knoblauch, Ulrich, Dr.-Ing. et al
Patentanwälte Dr. Knoblauch,
Kühhornshofweg 10
60320 Frankfurt (DE)

(56) Entgegenhaltungen:
DE-A- 2 834 046        DE-A- 4 204 762
DE-C- 3 942 284        GB-A- 2 287 998

**Beschreibung**

Die Erfindung bezieht sich auf eine Rohrschelle zum Verbinden der Enden zweier weitgehend glatter Rohre, mit einer die Fuge zwischen den Rohrenden überbrückenden Verbindungseinrichtung aus Metall, die durch wenigstens eine eine Spannschraube aufweisende Spanneinrichtung an den Enden eines die Verbindungseinrichtung umgebenden, unterbrochenen Bandes aus Metall in Umfangsrichtung der Rohre spannbar ist und nur an ihren axialen Enden jeweils eine sich in Umfangsrichtung der Rohre erstreckende, einteilig mit der Verbindungseinrichtung ausgebildete Reihe radial nach innen und schräg axial aus der Verbindungseinrichtung heraus gerichteter keilförmiger Zähne für den Eingriff ins Rohrmaterial aufweist, wobei die Zähne mit einer senkrecht zur Achse der Rohrschelle stehenden Ebene einen ersten Winkel und die Zahnflanken jedes Zahns einen zweiten Winkel ein-schließen.

Bei einer bekannten Rohrschelle dieser Art (DE-C-42 04 762) hat sich gezeigt, daß bei höher als 10 bar liegenden Drücken des durch die Rohre strömenden Fluids und insbesondere bei Rohren mit sehr harter Oberfläche die Gefahr besteht, daß die Rohre in der Rohrschelle axial auseinandergedrückt werden und die Verbindung undicht wird. Selbst eine doppelte Reihe von Zähnen an jedem Ende der Verbindungseinrichtung oder eine zweite Reihe von Zähnen an jedem Ende einer innerhalb der Verbindungseinrichtung angeordneten weiteren Verbindungseinrichtung ergab keine höhere Druckbelastbarkeit durch das durch die Rohre strömende Fluid, weil eine sehr viel höhere Spannkraft auf die Rohrschelle ausgeübt werden muß, um alle Zähne in das Rohrmaterial eindringen zu lassen, insbesondere bei harter Rohroberfläche. Dies gilt auch bei Rohrschellen mit an jedem Ende der Verbindungseinrichtung entgegengesetzt geneigten Zähnen, weil die zueinander hin geneigten Zähne mit ihrer radial inneren keilförmigen Kante unter axialer Druckbelastung der Rohre, die bestrebt ist, die Rohre auseinanderzuziehen, eher axiale Einschnitte zum jeweiligen Rohrende hin im Rohr ausbilden als einem Auseinanderziehen der Rohre entgegenzuwirken. In vielen Fällen ist es jedoch erwünscht, daß die Rohrschelle sehr viel höheren Drücken des durch die Rohre strömenden Fluids standhält, ohne daß die Rohrverbindung undicht wird.

Aus der GB-A-2 287 998 ist eine ähnliche Rohrschelle bekannt, bei der der Innenwinkel der Zähne, den sie mit der Rohrlängsrichtung einschließen, zur Erzielung einer möglichst großen Eindringtiefe der Zähne zwischen 33° und 38° liegt. Bei dieser Rohrschelle sind die Zähne jedoch an zusätzlichen Bändern ausgebildet, die mit einem Schellenmantel verschweißt sind. Jedes zusätzliche Band hat zwei Reihen gegensinnig geneigter Zähne. Die zusätzlichen Bänder erhöhen zum einen die Biegesteifigkeit des Schellenmantels und damit auch die erforderliche Spannkraft. Zum anderen sind sie aufwendig hinsichtlich Material und Montage. Die doppelte Zahnreihe an jedem Band steigert ebenfalls die erforderliche Spannkraft, um eine möglichst große Eindringtiefe zu erzielen.

Der Erfindung liegt die Aufgabe zugrunde, eine Rohrschelle der eingangs genannten Art anzugeben, die bei noch höheren Drücken und gleicher Einspannkraft einen festen Zusammenhalt der Rohre gewährleistet.

Erfindungsgemäß ist diese Aufgabe dadurch gelöst, daß der erste Winkel zwischen 33° und 38° liegt und daß das Band wenigstens einen sich in Umfangsrichtung des Bandes erstreckenden Schlitz aufweist, der an den Bandenden durch jeweils eine radial nach außen aus dem Band herausgebogene, etwa umgekehrt U-förmige Schlaufe überbrückt ist, deren Schenkelabstand gleich dem oder größer als der Schaftdurchmesser der durch zwei aneinandergrenzende Schlaufen hindurchgeführten Spannschraube ist.

In dem genannten Winkelbereich dringen die Zähne bei konstanter Spannkraft der Spanneinrichtung sehr tief in das Rohrmaterial ein, ohne daß die Zähne in Axialrichtung der Rohre zu ihren Enden hin verlaufende Einschnitte in das Rohrmaterial ausbilden, weil sie statt mit einer keilförmigen Schneidkante mit einer etwa dreieckförmigen Fläche in Axialrichtung zu den Rohrenden hin in das Rohrmaterial drücken. Die umgekehrt U-förmigen Schlaufen bilden in Umfangsrichtung hoch belastbare Spannbacken, an denen sich die Spannschraube zum Spannen des Bandes mit einer zur Erzielung einer großen Eindringtiefe der Zähne hohen Spannkraft abstützen kann. Die Schlaufen bedürfen ferner keiner separaten Herstellung und Montage. Wie sich gezeigt hat, hält die Verbindung der Rohre durch die Rohrschelle, je nach Rohrdurchmesser, selbst bei sehr hartem Rohrmaterial, in dem genannten Winkelbereich Drücken von bis zu 20 bar und mehr stand.

Vorzugsweise ist der erste Winkel gleich arc tan $\sqrt{0,5}$. Bei diesem Wert ist die Eindringtiefe der Zähne am größten und demzufolge auch die Belastbarkeit der Rohrverbindung.

Der zweite Winkel sollte höchstens 120° betragen und vorzugsweise zwischen 45° und 90° liegen. In diesem Winkelbereich dringen die Zähne besonders tief ins Rohrmaterial ein.

Wenn das Material der Verbindungseinrichtung härter als das der Rohre ist, vorzugsweise aus gehärtetem Stahl besteht, und demzufolge auch das Material der Zähne, neigen die Zähne auch bei Ausübung der höchsten Spannkraft der Spanneinrichtung nicht dazu, sich zu verbiegen, so daß der optimale erste Winkel der Zähne zuverlässig eingehalten wird.

Wenn die Umfangsränder radial nach innen abgewinkelt sind und an radial nach innen unter dem ersten Winkel abgewinkelten, die Zähne aufweisenden Umfangsrändern der Verbindungseinrichtung anliegen, sorgen die Umfangsränder des Bandes für eine axiale Abstützung der Zähne gegen ein Aufbiegen und damit für eine noch höhere Belastbarkeit der Verbindung.

Sodann kann dafür gesorgt sein, daß an den einander abgekehrten Rändern von die Schlaufenschenkel verbindenden Jochen der aneinandergrenzenden Schlaufen jeweils eine radial nach innen umgebogene Lasche ausgebildet ist, die an den angrenzenden Rändern der Schlaufenschenkel anliegt und ein Loch zur Durchführung des Spannschraubenschaftes aufweist, wobei der Spannschraubenkopf an der einen Lasche anliegt und der Spannschraubenschaft in ein Gewinde auf seiten der anderen Lasche eingreift. Die Spannschraube kann sich dann über die Laschen großflächig an den Schlaufen abstützen.

Das Gewinde kann in einer Mutter oder einem Durchzug der anderen Lasche ausgebildet sein.

Die Laschen können bei der Ausbildung mit Durchzug auf die Seitenwände der zugehörigen Schlaufe umgebogene Lappen aufweisen, um ein Hineinziehen der Laschen in die Schlaufen zu verhindern. Andererseits kann nur die auf seiten des Spannschraubenkopfes liegende Lasche auf die Seitenwände der zugehörigen Schlaufe umgebogene Lappen aufweisen und die Mutter durch die andere Lasche und auf Seitenflächen der Mutter umgebogene Lappen dieser Lasche gegen Drehung gesichert sein.

Ferner ist es günstig, wenn der Schlitz zwischen den Bandenden durch wenigstens eine weitere, radial nach außen aus dem Band vorstehende, etwa umgekehrt U-förmige Schlaufe überbrückt ist. An der weiteren Schlaufe kann ein Befestigungselement für die Rohre angebracht sein. Die Rohrschelle kann dann außerdem als Befestigungsschelle verwendet werden.

Vorzugsweise ist die weitere Schlaufe aus dem Band herausgebogen. Hierbei kommt man ohne zusätzliches Material für die weitere Schlaufe aus. Wenn der Schlitz aus dem Band ausgestanzt wird, wird das Material für die weitere Schlaufe nicht ausgestanzt. Dementsprechend kommt man mit weniger Abfall beim Ausstanzen des Schlitzes aus.

Alternativ kann die weitere Schlaufe zwischen dem Band und der Verbindungseinrichtung eingehängt und in Umfangsrichtung verschiebbar sein. Die Lage der weiteren Schlaufe am Umfang der Rohrschelle kann dann, weitgehend unabhängig von der jeweiligen Drehwinkellage der Rohrschelle, der jeweiligen Befestigungsstelle der Rohre an der Einbaustelle besser angepaßt werden.

Sodann kann die Verbindungseinrichtung ein Schellenband mit abgewinkelten Seitenwänden und einer zwischen den Seitenwänden angeordneten, die Fuge zwischen den Rohren abdeckenden Dichtungsmanschette umgeben. Die Dichtungsmanschette und das Schellenband sorgen dann im gespannten Zustand für eine Abdichtung der Fuge zwischen den Rohrenden.

Hierbei kann das Schellenband einen durch einen Schlitz in der Verbindungseinrichtung und durch den Schlitz des die Verbindungseinrichtung umgebenden Bandes radial herausragenden Spannverschluß aufweisen oder allein, unter Wegfall des Schlitzes in der Verbindungseinrichtung und des Spannverschlusses, durch die Spanneinrichtungen über die Verbindungseinrichtung spannbar sein.

Bei der ersten Alternative sind die Spanneinrichtungen und der Spannverschluß unabhängig von einander mit der zur Erzielung der erforderlichen Eindringtiefe der Zähne der Verbindungseinrichtung in das Rohrmaterial bzw. zur Abdichtung erforderlichen Kraft spannbar. Bei der zweiten Alternative entfällt dagegen das separate Spannen des Schellenbandes mit der Dichtungsmuffe, da Schellenband und Dichtungsmuffe gleichzeitig mit der Verbindungseinrichtung durch die Spanneinrichtungen gespannt werden können.

Die Erfindung und ihre Weiterbildungen werden nachstehend anhand der Zeichnungen von Ausführungsbeispielen näher beschrieben. Es zeigen:

Fig. 1 eine perspektivische Ansicht einer erfindungsgemäßen Rohrschelle, mittels der zwei Rohre verbunden und über ein Befestigungselement an einem Gebäudeteil befestigt sind,

Fig. 2 einen Ausschnitt des Axialschnitts II-II nach Fig. 1,

Fig. 3 einen Ausschnitt einer Seitenansicht einer Verbindungseinrichtung der Rohrschelle zur Veranschaulichung der Form der an den Rändern der Verbindungseinrichtung ausgebildeten Zahnreihen,

Fig. 4 den vergrößerten Ausschnitt A der Fig. 2,

Fig. 5 eine perspektivische Darstellung des in das Rohr eingreifenden Teils des Zahns nach Fig. 4,

Fig. 6 ein Diagramm der Abhängigkeit der Eindringtiefe des Zahns nach Fig. 4 bei konstantem Volumen des durch den eingedrungenen Zahnteil verdrängten Rohrmaterials vom ersten Winkel $\alpha$,

Fig. 7 eine Draufsicht auf eine aus einem Blech gestanzte Platine eines die Spanneinrichtung umgebenden Bandes vor dessen Verformung,

Fig. 8 eine perspektivische Ansicht eines Teils einer Abwandlung der erfindungsgemäßen Rohrschelle,

Fig. 9 eine Axialschnittansicht einer weiteren Abwandlung der erfindungsgemäßen Rohrschelle und

Fig. 10   eine Axialschnittansicht noch einer Abwandlung der erfindungsgemäßen Rohrschelle.

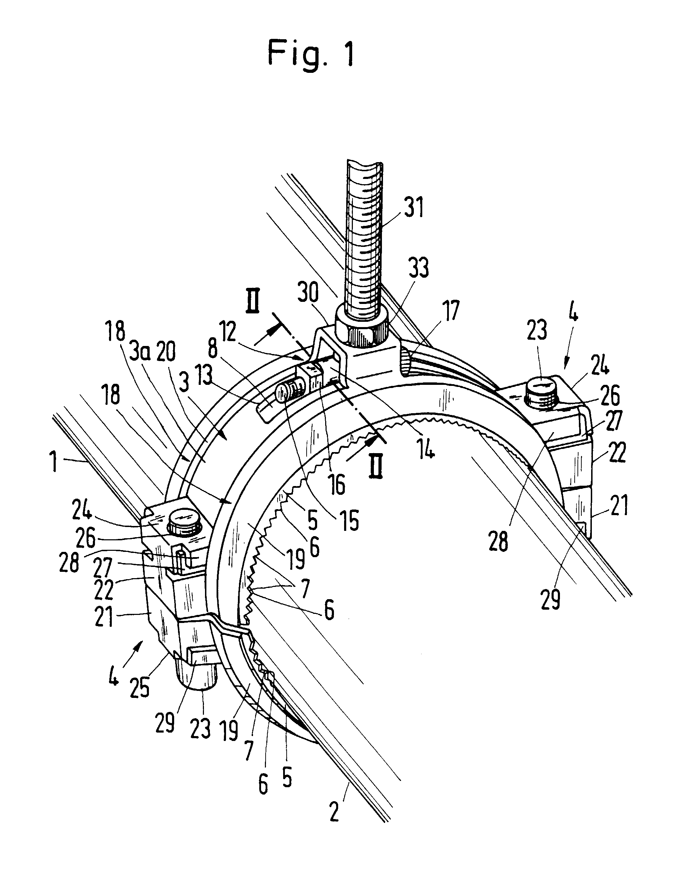

Die Rohrschelle nach den Fig. 1 bis 4 bildet zum einen eine Rohrkupplung zum Verbinden der Enden zweier weitgehend glatter zylindrischer Rohre 1 und 2 und zum anderen gleichzeitig eine Befestigungs-, insbesondere Aufhängeschelle. Sie hat eine Axialzugentlastungsschelle mit einer die Fuge zwischen den Enden, d.h. den einander zugekehrten Stirnseiten, der Rohre 1 und 2 überbrückenden Verbindungseinrichtung 3 in Form eines Schellenmantels, bestehend aus zwei Halbschalen 3a, deren Enden durch je eine Spanneinrichtung 4 verbunden sind. Die Verbindungseinrichtung 3 besteht aus Metall und hat schräg radial nach innen umgebogene Umfangsränder 5, die jeweils mit einer Reihe radial nach innen und schräg axial aus der Verbindungseinrichtung heraus gerichteter keilförmiger Zähne 6 mit Flanken 7 für den Eingriff ins Rohrmaterial versehen sind. Die Halbschalen 3a der Verbindungseinrichtung 3 bestehen aus hartem Stahl oder gehärtetem, rostfreiem Stahl oder gehärtetem Kohlenstoffstahl oder einsatzgehärtetem Stahl, so daß sie härter als das Rohrmaterial sind.

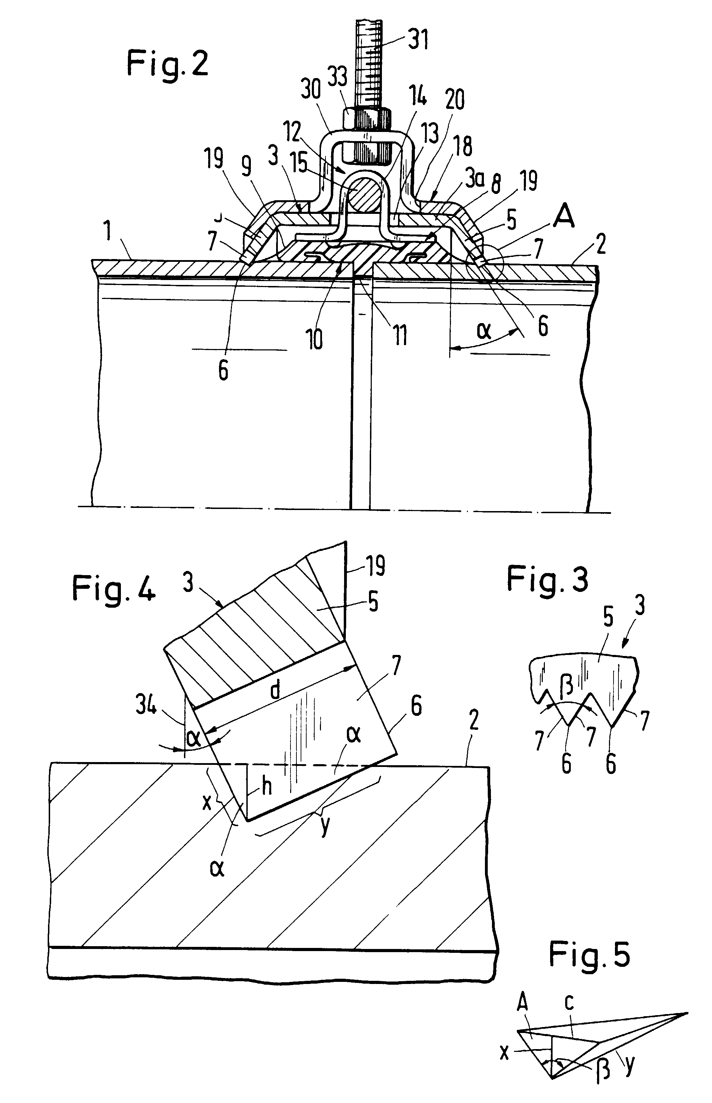

Auf der Innenseite der Verbindungseinrichtung 3 ist zwischen den beiden Umfangsrändern 5 ein spannbares Schellenband 8 angeordnet. Das Schellenband 8 hat an seinen axialen Enden schräg radial nach innen abgewinkelte Seitenwände 9 (Fig. 2), die sich im gespannten Zustand auf den Rohren 1, 2 abstützen und etwas nach innen durchgebogen sind. Zwischen den Seitenwänden 9 ist eine Dichtungsmanschette 10 aus elastomerem Material eingekammert. Die Dichtungsmanschette 10 hat auf ihrer Innenseite eine umlaufende Rippe 11, an der sich die Stirnseiten der Rohre 1, 2 zur Einschubbegrenzung der Rohre anlegen.

Nach Fig. 2 haben die Seitenwände 9 des Schellenbandes 8 einen axialen Abstand von den benachbarten Zähnen 6.

Das Schellenband 8 ist mit einem Spannverschluß 12 versehen, der durch einen sich in Umfangsrichtung erstreckenden Schlitz 13 in der Verbindungseinrichtung 3, hier in der einen Halbschale 3a, radial nach außen vorsteht. Der Spannverschluß 12 ist daher zum Spannen oder Entspannen des Schellenbandes 8 zugänglich. Die Verbindungseinrichtung 3 und das Schellenband 8 haben gemäß Fig. 2 einen radialen Abstand voneinander.

Der Spannverschluß 12 besteht aus zwei Spannbacken 14, von denen nur eine in Fig. 1 sichtbar ist, einer Spannschraube 15 und einer Mutter 16 in Vierkantform.

Die Spannbacken 14 bestehen jeweils aus einem Stahlband, das quer zum Schellenband 8 verläuft und in der Mitte radial nach außen in Form einer Öse zur Durchführung der Spannschraube 15 gewölbt ist (Fig. 2), wobei der Kopf 17 der Spannschraube 15 an der einen Kante der einen Öse und die Mutter 16 an der einen Kante der anderen Öse anliegt. Sodann sind die Spannbacken 14 durch Punktschweißungen mit dem Schellenband 8 verbunden.

Die Spanneinrichtungen 4 sind an den Enden eines die Verbindungseinrichtung 3 umgebenden, unterbrochenen Bandes 18 aus Metall ausgebildet. Das Band 18 ist mit den Halbschalen 3a stoffschlüssig, z.B. durch Punktschweißen, verbunden. Seine Umfangsränder 19 sind radial nach innen abgewinkelt und liegen an den radial nach innen unter dem ersten Winkel $\alpha$ abgewinkelten, die Zähne 6 aufweisenden Umfangsrändern 5 der Verbindungseinrichtung 3 an. Die Umfangsränder 19 verhindern daher ein Zurückbiegen der Umfangsränder 5 mit den Zähnen 7 beim Spannen der Spanneinrichtungen 4.

Die Spanneinrichtungen 4 sind in der Weise ausgebildet, daß das Band 18 wenigstens einen sich in Längsrichtung des Bandes 18 erstreckenden Schlitz 20 aufweist, der an den Bandenden durch jeweils eine radial nach außen aus dem Band herausgebogene, etwa umgekehrt U-förmige Schlaufe 21, 22 überbrückt ist, deren Schenkelabstand gleich dem oder größer als der Durchmesser des Schaftes einer Spannschraube 23 (Fig. 1) ist, die durch die beiden aneinandergrenzenden Schlaufen 21, 22 hindurchgeführt ist.

An den einander abgekehrten Rändern von die Schlaufenschenkel verbindenden Jochen der aneinandergrenzenden Schlaufen 21, 22 ist jeweils eine radial nach innen umgebogene Lasche 24, 25 ausgebildet, die an den angrenzenden Rändern der Schlaufenschenkel anliegt und ein Loch 26 zur Durchführung des Spannschraubenschaftes aufweist, wobei der Spannschraubenkopf an der einen Lasche 25 anliegt und der Spannschraubenschaft in ein Gewinde einer Mutter 27 in Vierkantform auf seiten der anderen Lasche 24 eingreift. Die Laschen 24, 25 haben jeweils auf beiden Seiten in Umfangsrichtung zurückgebogene Lappen 28, 29. Die Lappen 28 sind auf Seitenflächen der Muttern 27 und die Lappen 29 auf Seitenflächen der Schlaufen 21 zurückgebogen. Die Laschen 24 mit den Lappen 28 bilden daher Drehsicherungen für die Muttern 27, die an Rändern der Schlaufen 22 anliegen. Die Laschen 25 mit den Lappen 29 stützen dagegen die Köpfe der Spannschrauben 23 großflächig an den Schlaufen 21 ab und verhindern, daß die Köpfe beim Spannen der Spannschrauben in die Schlaufen 21 eindringen.

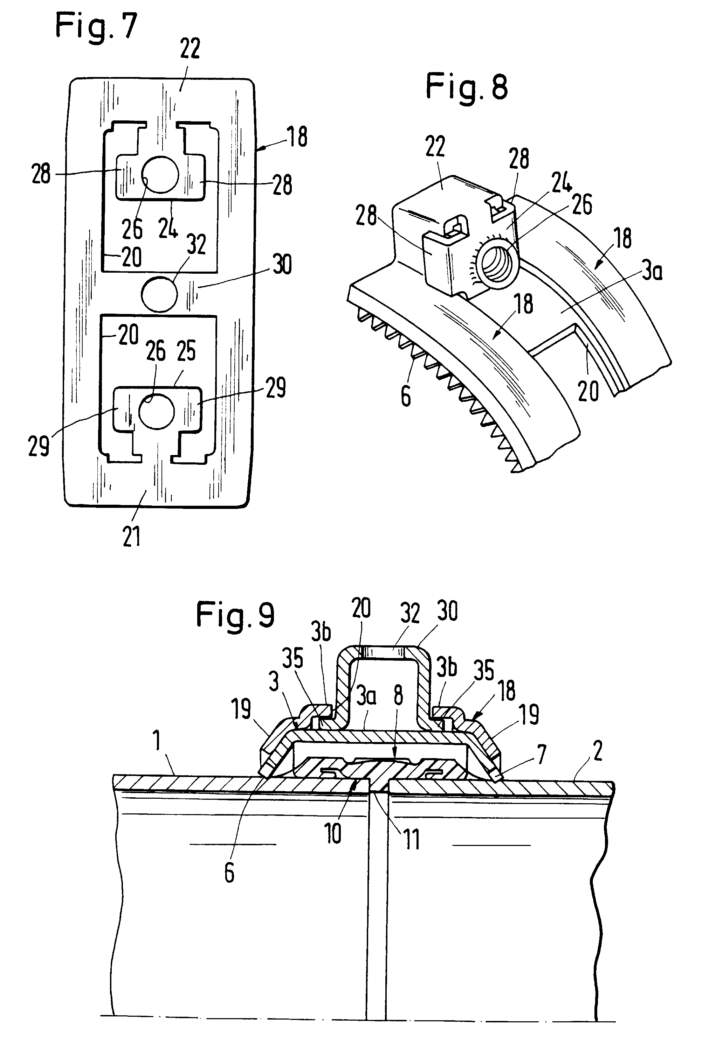

Der Schlitz 20 zwischen den die Schlaufen 21, 22 bildenden Enden des Bandes 18 ist durch wenigstens eine weitere, radial nach außen aus dem Band 18 vorstehende, etwa umgekehrt U-förmige Schlaufe 30 überbrückt. Die Schlaufe 30 ist aus dem Band 18 herausgebogen und kann dazu dienen, das Anbringen eines Befestigungselements für die Rohre 1, 2, z.B. einer Schraube 31, die durch ein Loch 32 (Fig. 7) im Joch der Schlaufe hindurchgeführt und mittels einer Mutter 33 gesichert wird, oder eines durch die Schlaufe 30 gezogenen Lochbandes zu ermöglichen. Die Rohrschelle kann daher nicht nur als Rohrkupplung, sondern auch als Rohrbefestigungsschelle zum Befestigen, z.B. Aufhängen, der Rohre 1, 2 an einem Gebäudeteil oder dergleichen verwendet werden.

Wie die Fig. 2, insbesondere Fig. 4, zeigt, schließen die Zähne 6 mit einer senkrecht zur Achse der Rohrschelle stehenden Ebene 34 einen ersten spitzen Winkel $\alpha$ ein, während ihre Flanken 7 nach Fig. 1, insbesondere Fig. 3, einen zweiten spitzen Winkel $\beta$ einschließen. Beim Spannen der Spanneinrichtungen 4 dringen die Zähne 6 daher mit ihren axial inneren Ecken normalerweise in das Rohrmaterial ein, wie es in den Fig. 2 und 4 dargestellt ist.

Gegebenenfalls kann die Verbindung der Rohre 1, 2 dann hohen Axialkräften bei hohen Drücken in den Rohren 1, 2 standhalten. Hierbei können die Innendrükke um so höher sein, je größer die Eindringtiefe der Zähne 6 ist. Insbesondere bei Rohren 1, 2 mit sehr harter Oberfläche besteht jedoch die Gefahr, das die Zähne 6 nicht hinreichend tief in das Rohrmaterial eingreifen, um das Auseinanderdrücken der Rohre 1, 2 bei sehr hohen Innendrücken zu vermeiden, da die Spannkraft, die durch die Spanneinrichtungen 4 ausgeübt werden kann, sich nicht unbegrenzt steigern läßt. Es läßt sich jedoch anhand von Fig. 4 zeigen, daß die Eindringtiefe h der Zähne 6 bei vorgegebener Spannkraft und der angegebenen Zahnform einen maximalen Wert bei einem bestimmten Winkel $\alpha$ erreicht. Diesem überraschenden Ergebnis liegt die Erkenntnis zugrunde, daß das Volumen des Rohrmaterials, das durch den ins Rohr eindringenden Zahnteil verdrängt wird, bei dem vorbestimmten Winkel $\alpha$ möglichst klein sein sollte. Denn je geringer das Volumen des verdrängten Rohrmaterials ist, um so größer wird bei vorgegebener Spannkraft der Spanneinrichtung 4 die Eindringtiefe h sein.

Für das Volumen V des verdrängten Rohrmaterials gilt (mit hinreichend genauer Annäherung):

$$V = A\,y/3 \qquad (1)$$

wobei A die axial innere Fläche des ins Rohrmaterial eingedrungenen, in Fig. 5 perspektivisch dargestellten Zahnteils ist. Dieser Zahnteil hat mit hinreichend genauer Annäherung die Form einer dreiseitigen Pyramide mit der Grundfläche A und der Höhe y. Die Fläche A ist der Flächeninhalt des gleichschenkligen Dreiecks mit der Grundlinie c, der Höhe x und dem Winkel $\beta$ an der Spitze gegenüber der Grundlinie c. Nach Fig. 4 gilt dann für die Höhe y der Pyramide

$$y = h/\sin\alpha \qquad (2)$$

und für den Inhalt der Grundfläche

$$A = cx/2 \qquad (3)$$

Für die Höhe x der Fläche A gilt nach Fig. 4

$$x = h/\cos\alpha \qquad (4)$$

und für die Grundlinie

$$c = 2x\tan(\beta/2) \qquad (5)$$

Durch Einsetzen der Gleichungen (2) bis (5) in die Gleichung (1) erhält man dann

$$V = \frac{h^3\tan(\beta/2)}{3\sin\alpha\,\cos^2\alpha} \qquad (6)$$

Durch Umschreiben der Gleichung (6) erhält man

$$h^3 = \frac{3V}{\tan(\beta/2)}\,\sin\alpha\,\cos^2\alpha \qquad (7)$$

und durch Normierung der Gleichung (7) gemäß der folgenden Gleichung (8)

$$h^3_n = h^3\,\frac{\tan(\beta/2)}{3V} \qquad (8)$$

ergibt sich für die normierte Eindringtiefe $h_n$ bei konstantem Volumen V und konstantem Winkel $\beta$

$$h_n = \sqrt[3]{\sin\alpha\,\cos^2\alpha} \qquad (9)$$

Die Abhängigkeit der normierten Eindringtiefe $h_n$ vom Winkel $\alpha$, die sich von der Eindringtiefe h nur durch den Proportionalitätsfaktor

$$k = \sqrt[3]{\frac{3\,V}{\tan\,(\beta/2)}} \qquad (10)$$

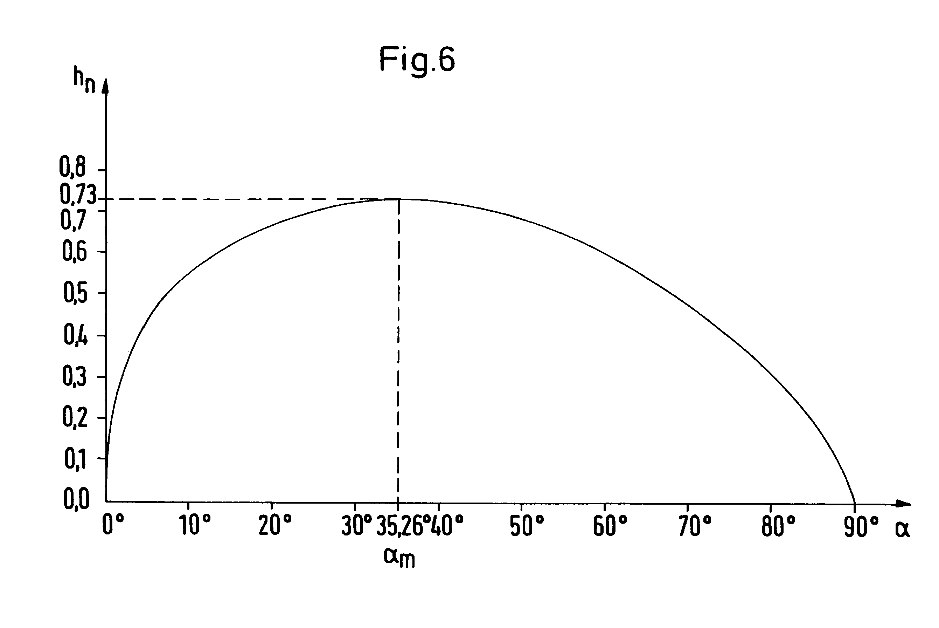

unterscheidet, ist in Fig. 6 als Kurvendiagramm dargestellt. Daraus ist ersichtlich, daß die Eindringtiefe bei dem Winkel $\alpha_m$ ein Maximum hat, und zwar unabhängig von V und $\beta$. Die Lage dieses Maximums bzw. des Winkels $\alpha_m$ ergibt sich durch Differentiation der Gleichung (9) nach $\alpha$ und Nullsetzen des Differentialquotienten zu

$$\alpha_m = \arctan\sqrt{0,5} = 35,26° \qquad (11)$$

Die optimale Eindringtiefe liegt daher bei $\alpha = \alpha_m$. Wie Fig. 6 zeigt, kann der Winkel $\alpha$ aber auch zwischen 33° und 38° liegen, ohne daß sich die Eindringtiefe wesentlich verringert. Durch Differentiation der Gleichung (6) nach $\alpha$ und Nullsetzen des Differentialquotienten läßt sich zeigen, daß bei dem gleichen Winkel von 35,26° das Volumen am kleinsten ist.

Andererseits ist die Eindringtiefe nach Gleichung (7) um so größer und das Volumen V nach Gleichung (6) um so kleiner, je kleiner der Winkel $\beta$ an der Zahnspitze zwischen den Flanken 7 ist, d.h. je spitzer die Zähne 6 sind. Daher sollte der Winkel $\beta$ nicht größer als 120° sein und vorzugsweise zwischen 45° und 90° liegen.

Für die Ableitung der Gleichungen (1) bis (11) gilt einschränkend, daß die Dicke d (Fig. 4) der Zähne 6 größer als y sein sollte, d.h. gemäß Gleichung (2)

$$d > h/\sin \alpha \qquad (12)$$

mit anderen Worten, daß die Zähne 6 nicht über ihre radial innere Kantenlänge hinaus ins Rohrmaterial eindringen.

Eine weitere einschränkende Voraussetzung für die Genauigkeit der Gleichungen (1) bis (10) ist, daß die Linie c in Fig. 5 als geradlinig angenommen ist, obwohl sie tatsächlich entsprechend dem Außendurchmesser der Rohre 1, 2 leicht gekrümmt ist, was bei der geringen Länge der Linie c im Verhältnis zum Umfang der Rohre 1, 2 jedoch vernachlässigbar ist.

Bei der Wahl des Winkels $\alpha_m$ hält die Rohrverbindung Fluiddrücken bis zu 20 bar und mehr stand. Bei einem Rohrdurchmesser von beispielsweise 50 bis 200 mm kann der zulässige Druck etwa 50 bis 5 bar betragen.

Fig. 7 stellt die Platine des Bandes 18 nach dem Ausstanzen aus einem Metallblech und vor dem Biegen der Schlaufen 21, 22, 30 und Laschen 24, 25 sowie Lappen 28, 29 dar. Wie man sieht, wird der Schlitz 20 nicht durchgehend ausgestanzt, sondern es bleibt das Material für die Laschen und Lappen stehen, so daß man mit weniger Abfall im Vergleich zu einer vollständigen Ausstanzung des Schlitzes 20 auskommt.

Bei der Abwandlung der erfindungsgemäßen Rohrschelle nach Fig. 8 sind die Löcher 26 in den an den Schlaufen 22 ausgebildeten Laschen 26 mit einem Durchzug und Innengewinde versehen, in das die jeweilige Spannschraube 23 geschraubt wird, so daß die bei dem ersten Ausführungsbeispiel vorgesehenen Muttern 27 entfallen. Stattdessen sind auch bei den Schlaufen 22 die Lappen 28 der Laschen 24 auf die Seitenwände der Schlaufen 22 umgebogen. Im übrigen entspricht die Abwandlung nach Fig. 8 dem zuvor geschilderten Ausführungsbeispiel.

Bei der Abwandlung nach Fig. 9 ist lediglich die weitere Schlaufe 30 nicht, wie bei dem ersten Ausführungsbeispiel, aus dem Band 18 herausgebogen, sondern getrennt hergestellt und mittels seitlich von der Schlaufe 30 abgebogener Endabschnitte 35 zwischen dem Band 18 und der Verbindungseinrichtung 3 eingehängt und in Umfangsrichtung verschiebbar. Zu diesem Zweck sind die am Schlitz 20 angrenzenden Randabschnitte 36 des Bandes 18 um einen Betrag radial nach außen gedrückt, der etwas größer als die Dicke der Endabschnitte 35 der Schlaufe 30 ist. Im übrigen ist die Rohrschelle nach Fig. 9 ebenso wie die Rohrschelle nach Fig. 1 ausgebildet. Die Schlaufe 30 ist in der in Fig. 9 dargestellten Schnittansicht relativ zu dem Verschluß 12 in Umfangsrichtung verschoben, so daß sie den Verschluß 12 nicht überbrückt. Sie kann an eine beliebige Stelle in Umfangsrichtung der jeweiligen Halbschale 3a zwischen den Spanneinrichtungen 4 verschoben werden, so daß die Drehwinkellage der Rohrschelle relativ zu den Rohren 1 und 2 anders als in Fig. 1 gewählt werden kann, und zwar dem jeweils verfügbaren Raum angepaßt, so daß das an der Schlaufe 30 angebrachte Befestigungselement weiterhin in der gleichen Richtung, z.B. nach oben, ragen kann, aber die Spanneinrichtungen leichter zugänglich sind.

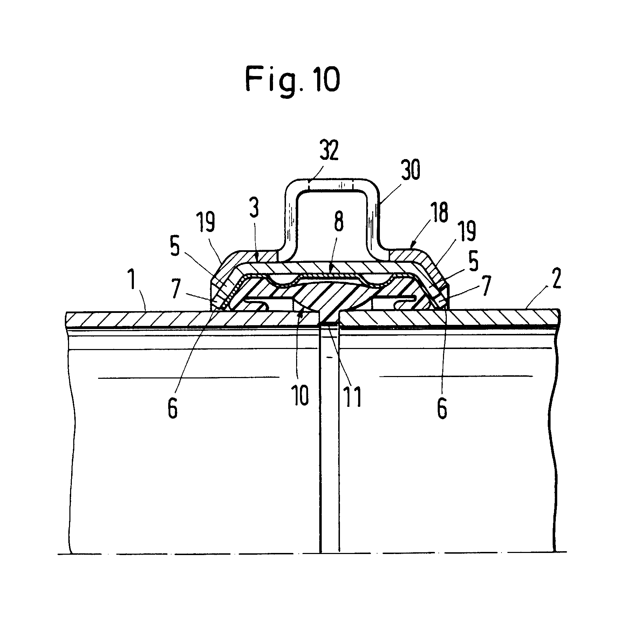

Die Rohrschelle nach Fig. 10 hat prinzipiell den gleichen Aufbau wie die in den Fig. 1 bis 7 oder 8 dargestellten, nur daß der Spannverschluß 12 und der Schlitz 13 weggelassen sind. Stattdessen ist das Schellenband 8 so bemessen, daß es im ungespannten, aber zusammengebauten Zustand der Rohrschelle an der Innenseite der Spanneinrichtung 3 unter leichter Vorspannung anliegt und sich an seinen Enden überlappt. Das Schellenband 8 drückt auf diese Weise die beiden Halbschalen 3a und das daran befestigte Band 18 radial auseinander, so daß die Rohre 1, 2 nacheinander bis zum Anschlag an der Rippe 11 axial leicht in die Dichtungsmuffe 10 eingeführt und dann die Spanneinrichtungen 4 gespannt werden können.

Nicht nur die Rohrschelle nach Fig. 10, sondern auch die Rohrschellen nach den Fig. 1 bis 9 können im zuvor auf seiten des Herstellers zusammengebauten, ungespannten Zustand auf den Enden zweier zu verbindender Rohre in der Weise montiert werden, daß zunächst die Rohre nacheinander mit ihren Enden bis zum Anschlag an der Rippe 11 der Dichtungsmuffe 10 eingeführt und dann die Spanneinrichtungen 4 gespannt werden.

Weitere Abwandlungen der dargestellten Ausführungsbeispiele können beispielsweise darin bestehen, daß anstelle der einen Spanneinrichtung 4 eine einteilige Verbindung oder eine Gelenkverbindung zwischen den beiden Hälften des Bandes 18 vorgesehen wird. Alternativ kann das Band der Verbindungseinrichtung 3 auch in drei oder mehr Abschnitte unterteilt sein, wobei dann drei oder mehr Spanneinrichtungen 4 vorgesehen sein können. Sodann kann anstelle des dargestellten Spannverschlusses 12 ein Spannverschluß entsprechend einer der Spanneinrichtungen 4 vorgesehen sein.

**Patentansprüche**

1.     Rohrschelle zum Verbinden der Enden zweier weitgehend glatter Rohre (1, 2), mit einer die Fuge zwischen den Rohrenden überbrückenden Verbindungseinrichtung (3) aus Metall, die durch wenigstens eine eine Spannschraube (23) aufweisende Spanneinrichtung (4) an den Enden eines die Verbindungseinrichtung (3) umgebenden, unterbrochenen Bandes (18) aus Metall in Umfangsrichtung der Rohre (1, 2) spannbar ist und nur an ihren axialen Enden jeweils eine sich in Umfangsrichtung der Rohre (1, 2) erstrekkende, einteilig mit der Verbindungseinrichtung ausgebildete Reihe radial nach innen und schräg axial aus der Verbindungseinrichtung heraus gerichteter keilförmiger Zähne (6) für den Eingriff ins Rohrmaterial aufweist, wobei die Zähne (6) mit einer senkrecht zur Achse der Rohrschelle stehenden Ebene (34) einen ersten Winkel (α) und die Zahnflanken (7) jedes Zahns (6) einen zweiten Winkel (β) einschließen, **dadurch gekennzeichnet**, daß der erste Winkel (α) zwischen 33° und 38° liegt und daß das Band (18) wenigstens einen sich in Umfangsrichtung des Bandes (18) erstreckenden Schlitz (20) aufweist, der an den Bandenden durch jeweils eine radial nach außen aus dem Band (18) herausgebogene, etwa umgekehrt U-förmige Schlaufe (21; 22) überbrückt ist, deren Schenkelabstand gleich dem oder größer als der Schaftdurchmesser der durch zwei aneinandergrenzende Schlaufen (21, 22) hindurchgeführten Spannschraube (23) ist.

2. Rohrschelle nach Anspruch 1, dadurch gekennzeichnet, daß der erste Winkel (α) gleich arc tan $\sqrt{0,5}$ ist.

3. Rohrschelle nach Anspruch 1 oder 2, dadurch gekennzeichnet, daß der zweite Winkel (β) höchstens 120° beträgt, vorzugsweise zwischen 45° und 90° liegt.

4. Rohrschelle nach einem der Ansprüche 1 bis 3, dadurch gekennzeichnet, daß das Material der Verbindungseinrichtung (3) härter als das der Rohre (1, 2) ist, vorzugsweise aus gehärtetem Stahl besteht.

5. Rohrschelle nach einem der Ansprüche 1 bis 4, dadurch gekennzeichnet, daß Umfangsränder (19) des Bandes (18) radial nach innen abgewinkelt sind und an radial nach innen unter dem ersten Winkel (α) abgewinkelten, die Zähne (6) aufweisenden Umfangsrändern (5) der Verbindungseinrichtung (3) anliegen.

6. Rohrschelle nach einem der Ansprüche 1 bis 5, dadurch gekennzeichnet, daß an den einander abgekehrten Rändern von die Schlaufenschenkel verbindenden Jochen der aneinandergrenzenden Schlaufen (21, 22) jeweils eine radial nach innen umgebogene Lasche (24; 25) ausgebildet ist, die an den angrenzenden Rändern der Schlaufenschenkel anliegt und ein Loch (26) zur Durchführung des Spannschraubenschaftes aufweist, wobei der Spannschraubenkopf an der einen Lasche (25) anliegt und der Spannschraubenschaft in ein Gewinde auf seiten der anderen Lasche (24) eingreift.

7. Rohrschelle nach Anspruch 6, dadurch gekennzeichnet, daß das Gewinde in einer Mutter (27) oder einem Durchzug der anderen Lasche (24) ausgebildet ist.

8. Rohrschelle nach Anspruch 7, dadurch gekennzeichnet, daß die Laschen (24, 25) bei der Ausbildung mit Durchzug auf die Seitenwände der zugehörigen Schlaufe (21; 22) umgebogene Lappen (28, 29) aufweisen.

9. Rohrschelle nach Anspruch 7, dadurch gekennzeichnet, daß nur die auf seiten des Spannschraubenkopfes liegende Lasche (25) auf die Seitenwände der zugehörigen Schlaufe (21) umgebogene Lappen (29) aufweist und die Mutter (27) durch die andere Lasche (24) und auf Seitenflächen der Mutter (27) umgebogene Lappen dieser Lasche gegen Drehung gesichert ist.

10. Rohrschelle nach einem der Ansprüche 1 bis 9, dadurch gekennzeichnet, daß der Schlitz (20) zwischen den Bandenden durch wenigstens eine weitere, radial nach außen aus dem Band (18) vorstehende, etwa umgekehrt U-förmige Schlaufe (30) überbrückt ist.

11. Rohrschelle nach Anspruch 10, dadurch gekennzeichnet, daß die weitere Schlaufe (30) aus dem Band (18) herausgebogen ist.

12. Rohrschelle nach Anspruch 10 oder 11, dadurch gekennzeichnet, daß an der weiteren Schlaufe (30) ein Befestigungselement (31) für die Rohre (1, 2) angebracht ist.

13. Rohrschelle nach Anspruch 12, dadurch gekennzeichnet, daß die weitere Schlaufe (30) zwischen dem Band (18) und der Verbindungseinrichtung (3) eingehängt und in Umfangsrichtung verschiebbar ist (Fig. 9).

14. Rohrschelle nach einem der Ansprüche 1 bis 13, dadurch gekennzeichnet, daß die Verbindungseinrichtung (3) ein Schellenband (8) mit abgewinkelten Seitenwänden (9) und einer zwischen den Seitenwänden (9) angeordneten, die Fuge zwischen den Rohren (1, 2) abdeckenden Dichtungsmanschette (10) umgibt.

15. Rohrschelle nach Anspruch 14 und einem der Ansprüche 1 bis 13, dadurch gekennzeichnet, daß das Schellenband (8) einen durch einen Schlitz (13) in der Verbindungseinrichtung (3) und durch den Schlitz (20) des die Verbindungseinrichtung (3) umgebenden Bandes (18) radial herausragenden Spannverschluß (12) aufweist oder allein, unter Wegfall des Schlitzes (13) in der Verbindungseinrichtung und des Spannverschlusses (12), durch die Spanneinrichtungen (4) über die Verbindungseinrichtung (3) spannbar ist.

**Claims**

1. A pipe clamp for connecting the ends of two substantially smooth pipes (1, 2), comprising a connecting device (3) of metal which bridges over the gap between the pipe ends and which can be tightened in the peripheral direction of the pipes (1, 2) by at least one tightening device (4) having a tightening screw (23) at the ends of an interrupted band (18) of metal which surrounds the connecting device (3), the connecting device having only at each of its axial ends a respective row, extending in the peripheral direction of the pipes (1, 2) and formed integrally with the connecting device, of wedge-shaped teeth (6) which are directed radially inwardly and inclinedly axially out of the connecting device, for engagement into the pipe material, wherein the teeth (6) include a first angle ($\alpha$) with a plane (34) which is perpendicular to the axis of the pipe clamp and the tooth flanks (7) of each tooth (6) include a second angle ($\beta$) characterised in that the first angle ($\alpha$) is between 33° and 38° and that the band (18) has at least one slot (20) which extends in the peripheral direction of the band (18) and which at each of the band ends is bridged over by a respective loop (21; 22) which is of an approximately inverted U-shape and which is bent radially outwardly out of the band (18) and the spacing between the limbs of which is equal to or greater than the shank diameter of the tightening screw (23) which is passed through two mutually adjoining loops (21, 22).

2. A pipe clamp according to claim 1 characterised in that the first angle ($\alpha$) is equal to arc tan $\sqrt{0.5}$.

3. A pipe clamp according to claim 1 or claim 2 characterised in that the second angle ($\beta$) is at most 120° and is preferably between 45° and 90°.

4. A pipe clamp according to one of claims 1 to 3 characterised in that the material of the connecting device (3) is harder than that of the pipes (1, 2) and preferably comprises hardened steel.

5. A pipe clamp according to one of claims 1 to 4 characterised in that the peripheral edges (19) of the band (18) are angled radially inwardly and bear against peripheral edges (5) of the connecting device (3), said peripheral edges (5) being angled radially inwardly at the first angle ($\alpha$) and having the teeth (6).

6. A pipe clamp according to one of claims 1 to 5 characterised in that a respective plate (24; 25) which is bent over radially inwardly is provided at each of the mutually remote edges of yokes of the mutually adjoining loops (21, 22), said yokes connecting the loop limbs, which plate bears against the adjoining edges of the loop limbs and has a hole (26) for the shank of the tightening screw to pass therethrough, wherein the tightening screw head bears against the one plate (25) and the tightening screw shank engages into a screwthread on the part of the other plate (24).

7. A pipe clamp according to claim 6 characterised in that the screwthread is formed in a nut (27) or a passage in the other plate (24).

8. A pipe clamp according to claim 7 characterised in that in the construction with a passage the plates (24, 25) have tags (28, 29) which are bent over onto the side walls of the associated loop (21; 22).

9. A pipe clamp according to claim 7 characterised in that only the plate (25) which is on the side of the tightening screw head has tags (29) which are bent over onto the side walls of the associated loop (21) and the nut (27) is prevented from rotating by the other plate (24) and tags of said plate, which are bent over onto side surfaces of the nut (27).

10. A pipe clamp according to one of claims 1 to 9 characterised in that the slot (20) between the band ends is bridged over by at least one further loop (30) which is of an approximately inverted U-shape and which projects radially outwardly out of the band (18).

11. A pipe clamp according to claim 10 characterised in that the further loop (30) is bent out of the band (18).

12. A pipe clamp according to claim 10 or claim 11 characterised in that a fixing element (31) for the pipes (1, 2) is disposed on the further loop (30).

13. A pipe clamp according to claim 12 characterised in that the further loop (30) is suspended between the band (18) and the connecting device (3) and is displaceable in the peripheral direction (Figure 9).

14. A pipe clamp according to one of claims 1 to 13 characterised in that the connecting device (3) embraces a clamp band (8) with angled side walls (9) and a sealing sleeve (10) which is arranged between the side walls (9) and which covers over the gap between the pipes (1, 2).

**15.** A pipe clamp according to claim 14 and one of claims 1 to 13 characterised in that the clamp band (8) has a tightening closure (12) which projects radially outwardly through a slot (13) in the connecting device (3) and through the slot (20) in the band (18) surrounding the connecting device (3) or, with the omission of the slot (13) in the connecting device and of the tightening closure (12), can be tightened solely by the tightening devices (4) by way of the connecting device (3).

## Revendications

**1.** Collier de serrage pour relier les extrémités de deux tubes (1, 2) majoritairement lisses, comportant un dispositif de liaison (3) en métal qui coiffe le joint entre les extrémités des tubes, peut être serré dans la direction périphérique desdits tubes (1, 2), par l'intermédiaire d'au moins un dispositif de serrage (4) muni d'une vis de serrage (23), aux extrémités d'un ruban discontinu (18) en métal ceinturant ledit dispositif de liaison (3) ; et qui présente, uniquement à ses extrémités axiales, une rangée respective s'étendant dans la direction périphérique des tubes (1, 2), réalisée d'un seul tenant avec le dispositif de liaison et constituée par des dents cunéiformes (6) orientées de manière à faire saillie au-delà dudit dispositif de liaison, vers l'intérieur dans le sens radial et à l'oblique dans le sens axial, en vue de s'enfoncer dans le matériau des tubes, les dents (6) décrivant un premier angle ($\alpha$) avec un plan (34) perpendiculaire à l'axe du collier de serrage, et les flancs (7) de chaque dent (6) décrivant un second angle ($\beta$), caractérisé par le fait que le premier angle ($\alpha$) est compris entre 33° et 38° ; et par le fait que le ruban (18) présente au moins une fente (20) s'étendant dans la direction périphérique dudit ruban (18) et dont la largeur est couverte, aux extrémités dudit ruban, par un étrier respectif (21 ; 22) qui est replié radialement vers l'extérieur au-delà du ruban (18), revêt sensiblement la forme d'un U inversé et dont la distance entre les branches est égale ou supérieure au diamètre de la tige de la vis de serrage (23) traversant deux étriers (21, 22) adjacents.

**2.** Collier de serrage selon la revendication 1, caractérisé par le fait que le premier angle ($\alpha$) est égal à arc tan $\sqrt{0,5}$.

**3.** Collier de serrage selon la revendication 1 ou 2, caractérisé par le fait que le second angle ($\beta$) mesure au maximum 120° et est compris, de préférence, entre 45° et 90°.

**4.** Collier de serrage selon l'une des revendications 1 à 3, caractérisé par le fait que le matériau constituant le dispositif de liaison (3) est plus dur que celui constituant les tubes (1, 2), et consiste préférentiellement en de l'acier trempé.

**5.** Collier de serrage selon l'une des revendications 1 à 4, caractérisé par le fait que des bords circonférentiels (19) du ruban (18) sont coudés radialement vers l'intérieur et sont appliqués contre des bords circonférentiels (5) du dispositif de liaison (3), qui sont pourvus des dents (6) et sont coudés radialement, vers l'intérieur, de la valeur du premier angle ($\alpha$).

**6.** Collier de serrage selon l'une des revendications 1 à 5, caractérisé par le fait qu'une patte (24 ; 25), recourbée radialement vers l'intérieur et respectivement ménagée sur les bords, tournés à l'opposé l'un de l'autre, de membrures des étriers adjacents (21, 22) qui solidarisent les branches desdits étriers, est appliquée contre les bords limitrophes desdites branches des étriers et comporte un trou (26) pour le passage de la tige de la vis de serrage, la tête de la vis de serrage portant contre l'une (25) des pattes, et la tige de ladite vis de serrage pénétrant dans un filetage pratiqué du côté de l'autre patte (24).

**7.** Collier de serrage selon la revendication 6, caractérisé par le fait que le filetage est façonné dans un écrou (27) ou dans un soyage de l'autre patte (24).

**8.** Collier de serrage selon la revendication 7, caractérisé par le fait que, dans le cas de la réalisation avec soyage, les pattes (24, 25) comportent des oreilles (28, 29) rabattues vers les parois latérales de l'étrier (21 ; 22) associé.

**9.** Collier de serrage selon la revendication 7, caractérisé par le fait que seule la patte (25), située du côté de la tête de la vis de serrage, présente des oreilles (29) rabattues vers les parois latérales de l'étrier (21) associé, et l'écrou (27) est empêché de tourner grâce à l'autre patte (24), et à des oreilles de cette patte qui sont rabattues sur des surfaces latérales dudit écrou (27).

**10.** Collier de serrage selon l'une des revendications 1 à 9, caractérisé par le fait que la largeur de la fente (20) est couverte, entre les extrémités du ruban, par au moins un étrier supplémentaire (30) sensiblement configuré en U inversé et saillant radialement, vers l'extérieur, au-delà dudit ruban (18).

**11.** Collier de serrage selon la revendication 10, caractérisé par le fait que l'étrier supplémentaire (30) est cintré vers l'extérieur à partir du ruban (18).

12. Collier de serrage selon la revendication 10 ou 11, caractérisé par le fait qu'un élément de fixation (31), destiné aux tubes (1, 2), est installé sur l'étrier supplémentaire (30).

13. Collier de serrage selon la revendication 12, caractérisé par le fait que l'étrier supplémentaire (30) est accroché entre le ruban (18) et le dispositif de liaison (3), et peut coulisser dans la direction périphérique (figure 9).

14. Collier de serrage selon l'une des revendications 1 à 13, caractérisé par le fait que le dispositif de liaison (3) ceinture un ruban de serrage (8) muni de parois latérales coudées (9) et d'une garniture d'étanchement (10) qui est interposée entre lesdites parois latérales (9), et recouvre le joint entre les tubes (1, 2).

15. Collier de serrage selon la revendication 14 et l'une des revendications 1 à 13, caractérisé par le fait que le ruban de serrage (8) présente une fermeture (12) à genouillère traversant radialement une fente (13) pratiquée dans le dispositif de liaison (3), et la fente (20) du ruban (18) ceinturant ledit dispositif de liaison (3), ou peut être bloqué uniquement par les dispositifs de serrage (4), par l'intermédiaire du dispositif de liaison (3), avec suppression de la fermeture (12) à genouillère et de la fente (13) pratiquée dans ledit dispositif de liaison.

EP 0 769 646 B1

# Fig. 1

Fig. 2

Fig. 4

Fig. 3

Fig. 5

Fig.6

**Fig. 7**

**Fig. 8**

**Fig. 9**

# Fig. 10